# EUROPÄISCHE PATENTSCHRIFT

(11) **EP 0 363 638 B1**
(45) Veröffentlichungstag und Bekanntmachung des Hinweises auf die Patenterteilung: **25.01.1995**
(21) Anmeldenummer: 89116414.7
(22) Anmeldetag: 06.09.1989
(51) Int. Cl.: H01H 25/06, H01H 3/50

(54) **Steuereinrichtung für einen elektrischen Schalter**
Control device for an electrical switch
Dispositif de commande pour interrupteur électrique

(30) Priorität: 10.10.1988 DE 3834390
(43) Veröffentlichungstag der Anmeldung: 18.04.1990
(73) Patentinhaber: Leopold Kostal GmbH & Co. KG, 58507 Lüdenscheid (DE)
(72) Erfinder: Hirschfeld, Klaus, D-5880 Lüdenscheid (DE); Abel, Thomas, Dr., D-5880 Lüdenscheid (DE)

(56) Entgegenhaltungen:
- DE-A- 2 631 144
- DE-A- 3 616 628
- DE-C- 741 310
- DE-U- 7 111 751

## Beschreibung

Die vorliegende Erfindung geht von einem gemäß dem Oberbegriff des Hauptanspruches konzipierten elektrischen Schalter mit einer Steuereinrichtung aus.

Derartige elektrische Schalter ermöglichen dem Benutzer diesen über das Betätigungsglied gezielt in verschiedene Schaltstellungen zu bringen. Darüber hinaus vermitteln derartige elektrische Schalter mit einer Steuereinrichtung über eine zugeordnete Rastung, für den Benutzer fühlbar und über die definierte Stellung des Betätigungsgliedes für den Benutzer sichtbar, welche Schaltstellung der elektrische Schalter gerade einnimmt bzw. in welcher Schaltstellung sich der elektrische Schalter gerade befindet.

Eine dem Oberbegriff des Hauptanspruches entsprechender elektrischer Schalter mit einer Steuereinrichtung ist durch das DE-GM 71 11 751 bekanntgeworden. Bei diesem Lichtdrehschalter mit einer zusätzlichen Verstellmöglichkeit in axialer Richtung ist die Steuerkulisse an der Schaltwelle ausgebildet. In die Steuerkulisse greifen zwei gegenüberliegend angeordnete, unter der Wirkung von jeweils einer Schraubendruckfeder stehende, als Kugeln ausgebildete Steuerglieder ein. Dabei ist die Steuerkulisse so ausgebildet, daß bei einer radialen oder axialen Verstellung des Betätigungsgliedes ausschließlich nur eine Verstellung der Steuerglieder in radialer oder axialer Richtung erfolgt. Durch diese Auslegung der Steuereinrichtung kann es aber z.B. bei einem kombinierten Licht-Nebellicht-Nebelschlußlichtschalter für Kraftfahrzeuge dazu kommen, daß der elektrische Schalter in Schaltstellungen gebracht wird, deren Funktion unzulässig ist. Dies ist beispielsweise dann der Fall, wenn sich der elektrische Schalter in einer Schaltstellung befindet, in der die Funktion Nebellicht bzw. Nebellicht-Nebelschlußlicht eingeschaltet ist, ohne daß zusätzlich die Funktion Standlicht bzw. Abblendlicht eingeschaltet ist.

Durch die DE-AS 26 31 144 ist darüber hinaus ein Kraftfahrzeug-Lichtdrehschalter mit einer zusätzlichen axialen Verstellmöglichkeit für die Funktionen Nebellicht und Nebelschlußlicht bekanntgeworden. Bei diesem Schalter wird das selbständige Verbleiben in unzulässigen Schaltstellungen in ihre Ausgangsschaltstellung verhindert. Allerdings ist es nicht möglich, beim Einschalten der Funktion Nebellicht bzw. Nebellicht-Nebelschlußlicht (axiale Verstellung des Betätigungsgliedes) automatisch auch die Funktion Standlicht (radiale Verstellung des Betätigungsgliedes) einzuschalten und somit automatisch nur zulässige Schaltstellungen zu erreichen. Darüber hinaus ist je eine separate Steuereinrichtung für die radiale und für die axiale Verstellung nötig, wodurch der gesamte Schalter im Hinblick auf die Anzahl der notwendigen Bauteile und die Fertigung relativ aufwendig ist.

Der vorliegenden Erfindung liegt die Aufgabe zugrunde, einen elektrischen Schalter mit einer Steuereinrichtung der eingangs erwähnten Art zu schaffen, wobei durch die Steuereinrichtung sowohl die Funktionen der radialen als auch der axialen Verstellung realisiert werden und wobei durch die Steuereinrichtung darüber hinaus gewährleistet ist, daß der elektrische Schalter durch die Betätigung des Betätigungsgliedes nur in zulässige Schaltstellungen bringbar ist.

Erfindungsgemäß wir die Aufgabe durch die im Hauptanspruch angegebenen Merkmale gelöst.

Vorteilhaft bei einer derartige Ausgestaltung ist, daß sich ein elektrischer Schalter mit einer solchen Steuereinrichtung durch die Verwendung von sehr wenigen, einfach herzustellenden Bauteilen realisieren läßt und damit besonders kostengünstig produziert werden kann und daß die Handhabung eines solchen elektrischen Schalters - bedingt durch eine solche Steuereinrichtung - für den Benutzer besonders einfach ist, weil unnötige Mehrfachbetätigungen durch Fehlbedienungen beim Ein- bzw. Ausschalten so gut wie ausgeschlossen sind, was bei Kraftfahrzeugen zu einer Entlastung des Fahrers und damit zu einer Erhöhung der Verkehrssicherheit beiträgt.

Weitere vorteilhafte Ausgestaltungen sind in den Unteransprüchen angegeben.

Anhand eines in der Zeichnung dargestellten Ausführungsbeispieles sei der erfindungsgemäße Gegenstand näher erläutert, und zwar zeigen
- Fig. 1: die Steuereinrichtung eines elektrischen Schalters im Vollschnitt
- Fig. 2: die Steuerkulisse der Steuereinrichtung in Netzwerkdarstellung
- Fig. 3: die Steuerkulisse in schematischer Draufsicht
- Fig. 3a: einen Schnitt durch die Steuerkulisse gemäß der Linie A-B
- Fig. 3b: einen Schnitt durch die Steuerkulisse gemäß der Linie C-D
- Fig. 3c: einen Schnitt durch die Steuerkulisse gemäß der Linie E-F.

Wie aus der Zeichnung hervorgeht, setzt sich ein elektrischer Schalter mit einer Steuereinrichtung im wesentlichen aus einem Betätigungsglied 1 sowie zwei durch das Betätigungsglied 1 beeinflußbaren, unter der Wirkung einer Schraubendruckfeder 2 stehenden Steuergliedern 3 und zwei jeweils mit einem Steuerglied 3 zusammenwirkenden, diametral gegenüberliegend angeordneten Steuerkulissen 4 zusammen.

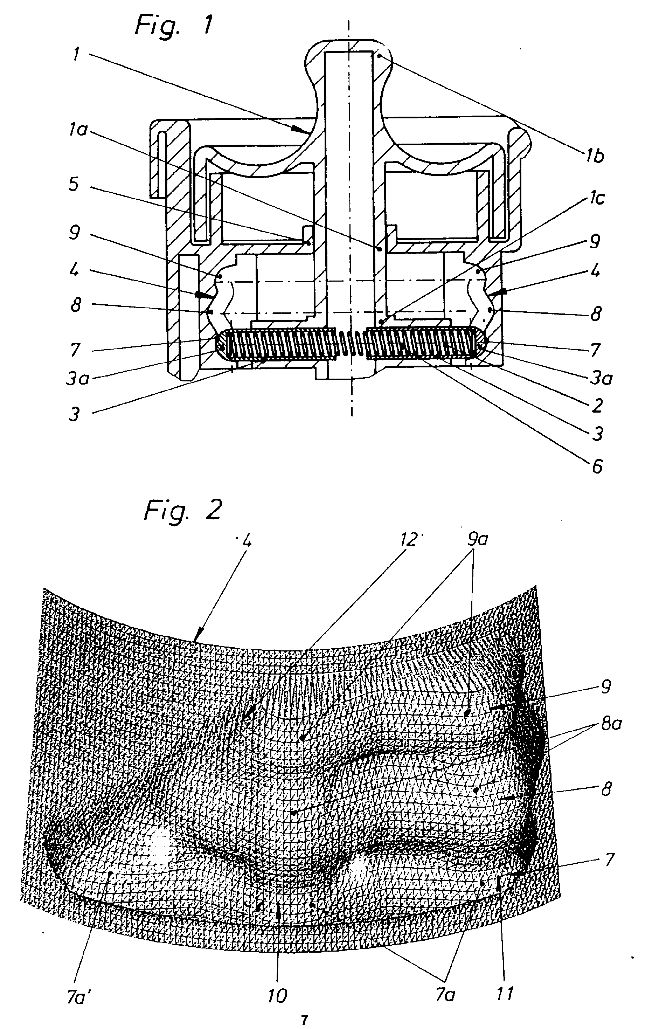

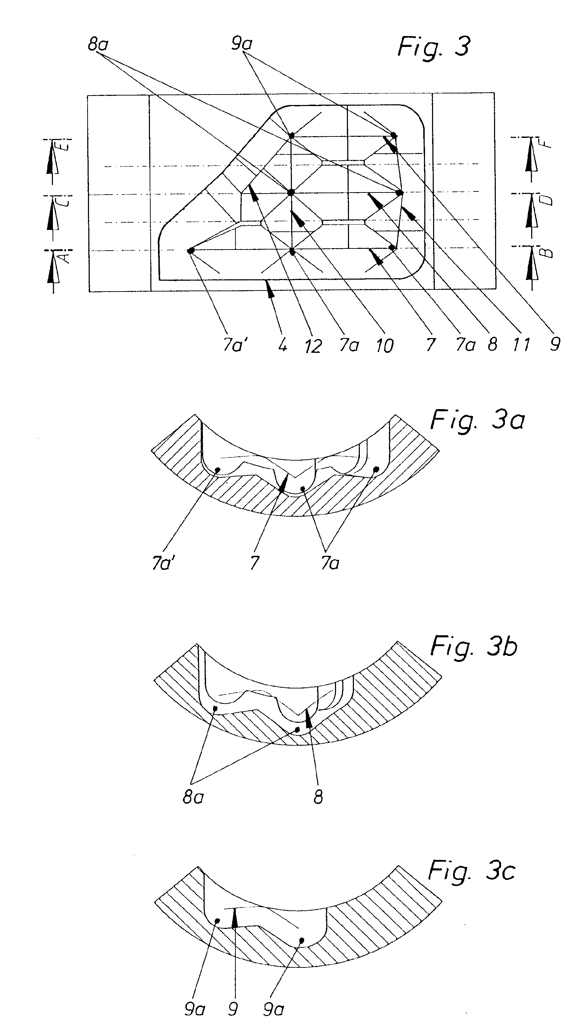

Das Betätigungsglied 1 ist mittels seiner Achse 1a radial und axial verstellbar im Gehäuse 5 des elektrischen Schalters gelagert, wobei das eine zur Betätigung vorgesehene Ende 1b als Drehknauf ausgebildet ist. Das andere Ende 1c des Betätigungsgliedes 1 ist mit einer Aufnahmekammer 6 für die Steuerglieder 3 und die Schraubendruckfeder 2 versehen Die Steuerglieder 3 sind vorzugsweise aus Kunststoff hergestellte Hülsen, die an ihren den Steuerkulissen 4 zugeordneten Enden 3a verschlossen sind. Die Schraubendruckfeder 2 stützt sich einerseits und andererseits an diesen verschlossenen Ende 3a der Steuerglieder 3 ab. Die mit den Steuerkulissen 4 in Eingriff kommenden Bereichen der verschlossenen Enden 3a sind halbrundförmig ausgebildet. Wie speziell aus den Figuren 1,2 und 3 hervorgeht, sind die Steuerkulissen 4 einstückig in das Gehäuse 5 eingeformt und weisen jeweils drei in radiale Richtung verlaufende, in axiale Richtung hintereinander angeordnete Profilbahnen 7,8,9 auf. Dabei sind in den Profilbahnen 7 jeweils drei Rastzonen 7a′, 7a und in den Profilbahnen 8 und 9 jeweils zwei Rastzonen 8a und 9a vorhanden. Die zweite Rastzone 7a der in radialer Richtung verlaufenden Profilbahnen 7 und die ersten Rastzonen 8a,9a der ebenfalls in radialer Richtung verlaufenden Profilbahnen 8,9 sowie die dritte Rastzone 7a der Profilbahnen 7 und die zweiten Rastzonen 8a,9a der Profilbahnen 8,9 stehen über in axialer Richtung verlaufende Profilbahnen 10,11 in Verbindung. Außerdem ist jeweils eine quer zu den Betätigungsrichtungen der Steuerglieder 3 verlaufende weitere Profilbahn 12 in den beiden Steuerkulissen 4 vorhanden, die jeweils die erste der Ausgangsschaltstellung zugeordnete Rastzone 7a′ der Profilbahn 7 und die erste Rastzone 9a der Profilbahn 9 miteinander verbindet. Die Profilbahnen 8 sind dabei mit ihrem einen Ende bis in die weiteren Profilbahnen 12 hineingeführt. Die Steuerkulissen 4 sind außerdem so ausgebildet, daß die Steuerglieder 3 nach jeder Betätigung des Betätigungsgliedes 1 von jedem beliebigen Punkt der Steuerkulissen 4 selbständig wieder in einer der Rastzonen 7a′, 7a,8a,9a zu liegen kommen.

Die Figur 1 zeigt die Steuereinrichtung des kombinierten Lichtdrehschalter mit zwei Zugstellungen für das Nebellicht bzw. Nebellicht-Nebelschlußlicht in ihrer Ausgangsschaltstellung. Dabei befinden sich die Steuerglieder 3 in den Rastzonen 7a′ der Profilkurven 7. Wird die Steuereinrichtung mittels des Betätigungsgliedes 1 um ihre Achse 1a verdreht - also Verstellung in radialer Richtung - kommen die Steuerglieder 3 in den dem Standlicht zugeordneten Rastzonen 7a der Profilkurven 7 zu liegen. Bei weiterer Drehung des Betätigungsgliedes 1 um seine Achse 1a kommen die Steuerglieder 3 in den dem Abblendlicht zugeordneten Rastzonen 7a der Profilkurven 7 zu liegen. Von jeder der dem Standlicht bzw. dem Abblendlicht zugeordneten Rastzonen 7a lassen sich die Steuerglieder 3 durch eine Zugbewegung des Betätigungsgliedes 1 - also eine Verstellung in axialer Richtung - in die Rastzonen 8a,9a, der Profilkurven 8,9 bringen. Geschieht das ausgehend von den Rastzonen 7a, die dem Standlicht zugeordnet sind, werden die Steuerglieder 3 über die in axialer Richtung verlaufenden Profilbahnen 10 in die Rastzonen 8a bzw. 9a gebracht, wodurch zusätzlich zum Standlicht auch das Nebellicht bzw. das Nebellicht-Nebelschlußlicht eingeschaltet wird. Geschieht das ausgehend von den Rastzonen 7a, die dem Abblendlicht zugeordnet sind, werden die Steuerglieder 3 über die in axialer Richtung verlaufenden Profilbahnen 11 in die Rastzonen 8a bzw. 9a gebracht, wodurch zusätzlich zum Abblendlicht das Nebellicht bzw. Nebellicht-Nebelschlußlicht eingeschaltet wird.

Durch eine Schubbewegung des Betätigungsgliedes 1 - also Verstellung in axialer Richtung - können die Steuerglieder 3 über die Profilbahnen 10 bzw. 11 wieder in die Rastzonen 7a (Standlicht bzw. Abblendlicht) der Profilbahnen 7 zurückgeführt werden. Durch ein Zurückdrehen des Betätigungsgliedes 1 - also Verstellung in radialer Richtung - werden die Steuerglieder 3 dann in die Ausgangsschaltstellung bzw. Rastzonen 7a′ gebracht.

Wird das Betätigungsglied 1 zurückgedreht, wenn sich die Steuerglieder 3 in den Profilbahnen 8 oder 9 befinden, gelangen die Steuerglieder 3 am Ende dieser Profilbahnen 8 oder 9 in die weiteren, quer zu den Betätigungsrichtungen der Steuerglieder 3 verlaufenden Profilbahnen 12 und letztendlich in die Ausgangsschaltstellung bzw. Rastzonen 7a′. Durch die weiteren Profilbahnen 12 werden die Steuerglieder 3 dabei nicht nur in radialer, sondern auch zwangsweise in axialer Richtung verstellt. Somit wird durch eine Betätigung des Betätigungsgliedes 1 in radialer Richtung nicht nur das Stand-bzw. Abblendlicht, sondern auch zwangsweise das Nebellicht bzw. Nebellicht-Nebelschlußlicht ausgeschaltet.

Soll ausgehend von der Ausgangsschaltstellung sofort das Nebellicht bzw. Nebellicht-Nebelschlußlicht eingeschaltet werden, so wird das Betätigungsglied 1 durch eine Zugbewegung in axialer Richtung verstellt. Die Steuerglieder 3 werden dabei durch die weiteren Profilbahnen 12 nicht nur in axialer, sondern auch zwangsweise in radialer Richtung verstellt und kommen in den ersten Rastzonen 8a bzw. 9a zu liegen. Damit wird durch eine Betätigung des Betätigungsgliedes 1 in axialer Richtung gleichzeitig zum Nebellicht bzw. Nebellicht-Nebelschlußlicht das Standlicht eingeschaltet.

Durch diese vorhergehend beschriebene Steuereinrichtung wird somit wirkungsvoll verhindert, daß der Benutzer eines Kraftfahrzeuges den elektrischen Schalter über das Betätigungsglied 1 in eine unzulässige Schaltstellung bringen kann.

Außerdem wird durch eine solche Steuereinrichtung wirkungsvoll vermieden, daß der Benutzer gleichzeitig das Betätigungsglied 1 in radialer und axialer Richtung verstellt, es sei denn, daß dies durch die Profilierung der Steuerkulissen 4 ausdrücklich vorgegeben ist.

Werden die Steuerglieder 3 durch eine Betätigung des Betätigungsgliedes 1 von einer in eine andere Rastzone gebracht, wird dies dem Benutzer durch eine deutliche Zunahme bzw. eine Abnahme der Betätigungskräfte mitgeteilt. Diese Zunahme bzw. Abnahme der Betätigungskräfte wird durch das Zusammenwirken der Steuerglieder 3, der Schraubendruckfeder 2 und der Steuerkulissen 4 erreicht.

## Patentansprüche

1. Elektrischer Schalter mit einer Steuereinrichtung, mit einem radial und axial verstellbar im Gehäuse (5) gelagerten Betätigungsglied (1) sowie zumindest einem durch das Betätigungsglied (1) beeinflußbaren, ebenfalls radial und axial verstellbar im Gehäuse (5) gelagerten, zumindest einer Steuerkulisse (4) zugeordneten, unter Federwirkung stehenden Steuerglied (3), wobei die Steuerkulisse (4) in axialer und radialer Richtung verlaufende Profilbahnen (7,8,9) aufweist, durch die das Steuerglied (3) bei einer Verstellung des Betätigungsgliedes (1) geführt wird und wobei die Profilbahnen (7,8,9) jeweils mit mehreren verschiedenen Schaltstellungen zugeordneten Rastzonen (7a,8a,9a) versehen sind, **dadurch** **gekennzeichnet**, daß in der zumindest einen Steuerkulisse (4) darüber hinaus zumindest eine quer zu den Betätigungsrichtungen des zugeordneten Steuergliedes (3) verlaufende, bei einer Verstellung des Steuergliedes (3) in einer der Betätigungsrichtungen eine Verstellung des Steuergliedes (3) zwangsweise und gleichzeitig in der anderen Betätigungsrichtung hervorrufende, weitere Profilbahn (12) vorhanden ist.

2. Elektrische Schalter nach Anspruch 1, dadurch gekennzeichnet, daß in der Steuerkulisse (3) drei in radialer Richtung verlaufende, in axialer Richtung hintereinander angeordnete Profilbahnen (7,8,9) vorhanden sind, wobei in der ersten Profilbahn (7) drei Rastzonen (7a′,7a) und in den beiden anderen Profilbahnen (8,9) jeweils zwei Rastzonen (8a,9a) vorhanden sind und daß ausgehend von einer der Rastzonen (7a′,7a) der ersten Profilbahn (7), zumindest eine Rastzone (8a,9a) von zumindest einer der beiden anderen Profilbahnen (8,9) über eine quer zu den Betätigungsrichtungen des Steuergliedes (3) verlaufende weitere Profilbahn (12) verbunden ist.

3. Elektrischer Schalter nach Anspruch 2, dadurch gekennzeichnet, daß die erste der drei Rastzonen (7a′) der ersten Profilbahn (7) der Ausgangsschaltstellung und die beiden übrigen Rastzonen (7a) der ersten Profilbahn (7) sowie jeweils die zwei Rastzonen (8a,9a) der beiden anderen Profilbahnen (8,9) den Funktionsschaltstellungen des elektrischen Schalters zugeordnet sind und daß die jeweils zwei den Funktionsschaltstellungen des elektrischen Schalters zugeordneten Rastzonen (7a,8a,9a) in axialer Richtung hintereinanderliegend angeordnet sind und über jeweils eine in axialer Richtung verlaufende Profilbahn (10,11) in Verbindung stehen, daß die der Ausgangsschaltstellung zugeordnete Rastzone (7a′) der ersten Profilbahn (7) über die quer zu den Betätigungsrichtungen des Steuergliedes (3) verlaufende weitere Profilbahn (12) direkt mit der ersten Rastzone (9a) der dritten Profilbahn (9) verbunden ist und daß die mittlere in radialer Richtung verlaufende Profilbahn (8) mit ihrem einen Ende bis in die weitere Profilbahn (12) hineingeführt ist.

4. Elektrischer Schalter nach Anspruch 1 oder einem der folgenden, dadurch gekennzeichnet, daß die Steuerkulisse (4) ein aus einem geeigneten verschleißfesten Kunststoff gefertigtes, separat in das Gehäuse (5) des elektrischen Schalter einsetzbaren Bauteil ist.

5. Elektrischer Schalter nach Anspruch 1 oder einem der folgenden, dadurch gekennzeichnet, daß die Steuerkulisse (4) einstückig in das Gehäuse (5) des elektrischen Schalters eingeformt ist.

6. Elektrischer Schalter nach Anspruch 1 oder einem der folgenden, dadurch gekennzeichnet, daß die mit der Steuerkulisse (4) zusammenwirkenden Bereiche der Steuerglieder (3) eine kugelige Form aufweisen.

7. Elektrischer Schalter nach Anspruch 1 oder einem der folgenden, dadurch gekennzeichnet, daß in dem elektrischen Schalter zwei diametral gegenüberliegend angeordnete Steuerkulissen (4) vorhanden sind, in die jeweils ein Steuerglied (3) eingreift.

8. Elektrischer Schalter nach Anspruch 1 oder einem der folgenden, dadurch gekennzeichnet, daß die zumindest eine Steuerkulisse (4) achsenfern am Gehäuse (5) vorhanden ist.

## Claims

1. Control device for an electrical switch with an actuation element (1) that is mounted in the housing (5) in such a way that it can be angularly and axially displaced, as well as at least one control element (3) which can be influenced by the actuation element (1) and that is likewise mounted in the housing in such a way that it can be angularly and axially displaced and that is under the effect of spring action and that is assigned to at least one camform (4), whereby the camform (4) exhibits moulded tracks running in angular and axial directions, through which the control element (3) is driven during a displacement of the actuation element (1) and whereby the moulded tracks (7,8,9) each are provided with several detent zones (7a,7a′,8a,9a) assigned to different switch settings, characterized in that in the camform (4), of which there is at least one, at least one additional moulded track (12) is present which runs inclined to the actuation directions of the control element (3) and which during a displacement of the control element (3) in one of the actuation directions simultaneously calls forth an inevitable displacement of the control element (3) in the other actuation direction.

2. Control device according to Claim 1, characterized in that in the camform (4), three moulded tracks (7,8,9) are present which run in angular direction and which lie one behind the other in the axial direction, whereby in the first moulded track (7) three detent zones (7a′,7a) are present and in each of the two other moulded tracks (8,9), two detent zones (8a,9a) are present and by the fact that, starting from one of the detent zones (7a′,7a) of the first moulded track (7), at least one detent zone (8a,9a) of at least one of the two other moulded tracks (8,9) is connected via an additional moulded track (12) that runs inclined to the actuation directions of the control element (3).

3. Control device according to Claim 1 or 2, characterized in that the first of the three detent zones (7a′) of the first moulded track (7) is assigned to the starting switch setting and the two remaining detent zones (7a) of the first moulded track (7) as well as each of the two detent zones (8a,9a) of the two other moulded tracks (8,9) are assigned to the function switching settings of the electrical switch; and that the detent zones (7a,8a,9a) assigned to the function switching settings in the three tracks of the electrical switch are arranged lying one behind the other in the axial direction, whereby the first detent zones (7a,8a,9a) are connected by a first moulded track (10) running in axial direction and the second detent zones (7a,8a,9a) are connected by a second moulded track (11) running likewise in axial direction, that the detent zone (7a′) assigned to the starting switch setting of the first moulded track (7) is connected directly to the first detent zone (9a) of the third moulded track (9) via the additional moulded track (12) running inclined to the actuation directions of the control element (3) and that the center moulded track (8) running in angular direction is extended at one of its ends into the additional moulded track (12).

4. Control device according to Claim 1 or one of the following, characterized in that the camform (4) is a component that can be installed separately in the housing (5) of the electrical switch and is made from a suitable wear-resistant plastic.

5. Control device according to Claim 1 or one of the following, characterized in that the camform (4) is moulded as an integral part into the housing (5) of the electrical switch.

6. Control device according to Claim 1 or one of the following, characterized in that the areas of the control element(s) (3) that interact with the camform(s) (4) are spherical in shape.

7. Control device according to Claim 1 or one of the following, characterized in that in the electrical switch, two camforms (4) are mounted diametrically opposed, into each of which a control element (3) engages.

8. Control device according to Claim 1 or one of the following, characterized in that at least one camform (4) is present which is positioned on the housing (5) at a maximum possible distance from the switch axis.

## Revendications

1. Commutateur électrique avec dispositif de commande comprenant un organe d'actionnement (1) à mouvement rotatif angulaire et déplacement axial, monté dans un boîtier (5), ainsi qu'au moins un organe de commande (3), qui, influencé par l'organe d'actionnement (1) et logé dans le boîtier (5), est aussi réglable par mouvement angulaire et axial et est affecté à au moins une coulisse de commande (4), tout en étant soumis à l'effet d'un ressort, la coulisse de commande (4) présentant des voies profilées (7, 8, 9) qui s'étendent dans le sens axial et le sens radial, et par lesquelles l'organe de commande (3) est guidé lors d'un réglage de l'organe d'actionnement (1), et les voies profilées (7, 8, 9) étant pourvues de zones de crantage (7a, 8a, 9a), affectées à plusieurs positions de commutation différentes,
caractérisé en ce que,
dans au moins l'une des coulisses de commande (4), une autre voie profilée (12), au moins, est prévue, en outre, laquelle est disposée transversalement par rapport aux directions d'actionnement de l'organe de commande (3) correspondant, et provoque, obligatoirement et simultanément, lors du réglage de l'organe de commande (3) dans l'une des directions d'actionnement, le déplacement de l'organe de commande (3) dans l'autre direction d'actionnement.

2. Commutateur électrique selon la revendication 1,
caractérisé en ce que
trois voies profilées (7, 8, 9), s'étendant radialement, sont disposées, l'une derrière l'autre, dans le sens axial, dans la coulisse de commande (4), trois zones de crantage (7a′, 7a) étant prévues dans la première voie profilée (7), et deux zones de crantage (8a, 9a) dans chacune des deux autres voies profifilées (8, 9) et qu'à partir de l'une des zones de crantage (7a′, 7a) de la première voie profilée (7) au moins, une zone de crantage (8a, 9a) d'au moins l'une des deux autres voies profilées (8, 9) est reliée par une autre voie profilée (12), qui s'étend transversalement par rapport aux directions d'actionnement de l'organe de commande (3).

3. Commutateur électrique selon la revendication 2,
caractérisé en ce que
la première des trois zones de crantage (7a′) de la première voie profilée (7) correspond à la position de commutation de départ et que les deux autres zones de crantage (7a) de la première voie profilée (7) ainsi que les deux zones de crantage (8a, 9a) de chacune des deux autres voies profilées (8, 9) sont affectées aux positions de commutation de fonctions du commutateur électrique, et que, respectivement, deux zones de crantage (7a, 8a, 9a), affectées aux positions de commutation de fonctions du commutateur électrique, sont disposées l'une derrière l'autre, dans le sens axial, et sont reliées respectivement par une voie profilée (10, 11) s'étendant dans le sens axial, que la zone de crantage (7a′) de la première voie profilée (7), affectée à la position de commutation de départ, est reliée directement avec la première zone de crantage (9a) de la troisième voie profilée (9), par l'intermédiaire de l'autre voie profilée (12) qui s'étend transversalement par rapport aux directions d'actionnement de l'organe de commande (3), et que l'une des extrémités de la voie profilée médiane (8), s'étendant dans le sens radial, est conduite jusque dans l'autre voie profilée (12).

4. Commutateur électrique selon la revendication 1 ou l'une des revendications suivantes,
caractérisé en ce que
La coulisse de commande (4) est un élément de construction en matière plastique appropriée, résistante à l'usure, incorporable séparément dans le boîtier (5) du commutateur électrique.

5. Commutateur électrique selon la revendication 1 ou l'une des revendications suivantes,
caractérisé en ce que
la coulisse de commande (4) est formée en une pièce dans le boîtier (5) du commutateur électrique.

6. Commutateur électrique selon la revendication 1 ou l'une des revendications suivantes,
caractérisé en ce que
les zones de l'organe de commande (3) concourant avec la coulisse de commande (4) présentent une forme sphérique.

7. Commutateur électrique selon la revendication 1 ou l'une des revendications suivantes,
caractérisé en ce que
deux coulisses de commande (4) diamétralement opposées sont disposées dans le commutateur électrique, un organe de commande (3) s'engageant dans chacune de ces coulisses de commande (4).

8. Commutateur électrique selon la revendication 1 ou l'une des revendication suivantes,
caractérisé en ce que
une coulisse de commande (4) au moins est prévue au boîtier (5), à distance de l'axe.
